# EUROPEAN PATENT SPECIFICATION

(11) **EP 2 709 203 B1**
(45) Date of publication and mention of the grant of the patent: **18.11.2015**
(21) Application number: 11878614.4
(22) Date of filing: 28.12.2011
(51) Int. Cl.: H01M 12/08

(54) **CELL SYSTEM**
ZELLENSYSTEM
SYSTÈME CELLULAIRE

(43) Date of publication of application: 19.03.2014
(73) Proprietor: YABE SCIENCE PROMOTION LLC, Tokyo 114-0013 (JP)
(72) Inventor: YABE, Takashi, Tokyo 114-0013 (JP)
(74) Representative: Jones, Helen M.M.
(86) International application number: PCT/JP2011/080423
(87) International publication number: WO 2013/098997

(56) References cited:
- WO-A2-02/35627
- JP-A- 2003 515 889
- JP-A- 2003 521 795
- JP-A- 2005 518 644
- US-A- 3 432 354
- US-A- 5 250 370
- US-A1- 2004 247 969
- US-B1- 6 335 111
- US-B1- 6 641 943

## Description

### Technical Field

The present invention relates to a cell system and, in particular, relates to a cartridge-type magnesium battery and a system.

### Background Art

Patent Literature 1 discloses a power generating apparatus including two systems, one of which generates hydrogen gas by hydrolysis and generates electric power by a hydrogen demanding unit and the other generates electric power by an oxidation-reduction chemical reaction involving electrodes and ions. This power generating apparatus configures: hydrogen releasing means by a hydrogen generating container in which a functional material is mounted within the container or in which a functional material is mounted on a negative electrode and a positive electrode and a battery element formed of electrolyte is provided within the container; hydrogen generating means comprising a liquid container for generating hydrogen gas both by hydrolysis through which the functional material is reacted with water or an aqueous solution (an electrolyte solution) and by bonding of hydrogen atoms that are fixed among crystals due to a change in properties of the functional material by the hydrolysis; first electrogenic means for allowing the battery element in the hydrogen generating container to generate electricity; second electrogenic means in which the hydrogen demanding unit generates electricity by utilizing the generated hydrogen gas in the hydrogen generating container; and control means for controlling the amount of the hydrogen gas generated by the hydrogen generating means according to the amount of current flowed through the load of a load device with which the electric power generated in the first electrogenic means is electrified.

### Citation List

### Patent Literature

Patent Literature 1: International Publication No. WO 2008/015844

### Summary of Invention

### Technical Problem

However, the power generating apparatus disclosed in Patent Literature 1 is large-scale and the field of application is limitative.

US6641943 discloses a cell system using air as a positive-electrode active material and a specific substance as a negative-electrode active material, the cell system comprising: a thin film of the specific substance; a pair of reels, each end being connected to the thin film; and an electrode positioned in a vicinity of a path of the thin film between each of the reels, wherein the specific substance may be zinc, beryllium or aluminum and the electrode may be carbon and wherein the thin film and the pair of reels are contained in a cartridge. It further discloses a corresponding method of generating electrical current, wherein a cell having air as a positive electrode active material and a specific substance as a negative electrode active material comprises a thin film of said specific substance, wherein the thin film of the specific substance is reeled between a pair of reels; wherein during transfer between the reels the thin film contacts an electrode; the electrode generates power in contact with the thin film and the thin film is oxidised, wherein the specific substance may be zinc, beryllium or aluminum and the electrode may be carbon and wherein the thin film and the pair of reels are contained in a cartridge.

A similar disclosure is made in US6335111.

US2004247969 discloses a cell system using air as a positive-electrode active material and a specific substance as a negative-electrode active material, the cell system comprising: a thin film of the specific substance; a pair of reels, each end being connected to the thin film; and an electrode positioned in a vicinity of a path of the thin film between each of the reels, wherein the thin film and the pair of reels are contained in a cartridge.

It further discloses a corresponding method of generating electrical current, wherein a cell having air as a positive electrode active material and a specific substance as a negative electrode active material comprises a thin film of said specific substance; wherein the thin film of the specific substance is reeled between a pair of reels; wherein during transfer between the reels the thin film contacts an electrode, the electrode generates power in contact with the thin film and the thin film is oxidised, wherein the thin film and the pair of reels are contained in a cartridge and wherein the t in film is prepared for another cycle through the cell by dissolving the oxidised thin film in a liquid solution in a container.

Similar disclosures are made in WO02/35627 and US3432354.

Here, the objective of the present invention is to provide a cell system with a simple structure.

### Solution to Problem

The present invention includes a cell system using air as a positive-electrode active material and a specific substance as a negative-electrode active material, the cell system including:
a thin film of the specific substance;
a pair of reels, each end being connected to the thin film; and
an electrode positioned in a vicinity of a path of the thin film between each of the reels.

The cell system comprises a container that is positioned downstream of the electrode and includes a liquid solution that dissolves the specific substance oxidized when power is generated.

Furthermore, as one example, the specific substance may include magnesium, zinc, lithium, iron, carbon, sodium, beryllium, aluminum, cadmium, sulfur, lead and the like; the electrode may include copper, carbon, manganese dioxide, aluminum, gold, silver, beryllium and magnesium; and a component of the liquid solution may include hydrochloric acid, sulfuric acid, acetic acid, nitric acid, stearic acid, formic acid, citric acid, aqueous ammonia, sodium hydroxide, calcium chloride, sodium carbonate, ammonium chloride, ethanol, benzyl alcohol, cyclohexanol, ethylene glycol, acetone, benzene, aniline, toluene, cyclohexanone, carbon tetrachloride, trichlorethylene, castor oil, synthetic detergent and the like.

Furthermore, the magnesium battery of the present invention includes the pair of reels to which the thin film is connected, where the pair of reels may be configured by a cartridge type.

### Brief Description of Drawings

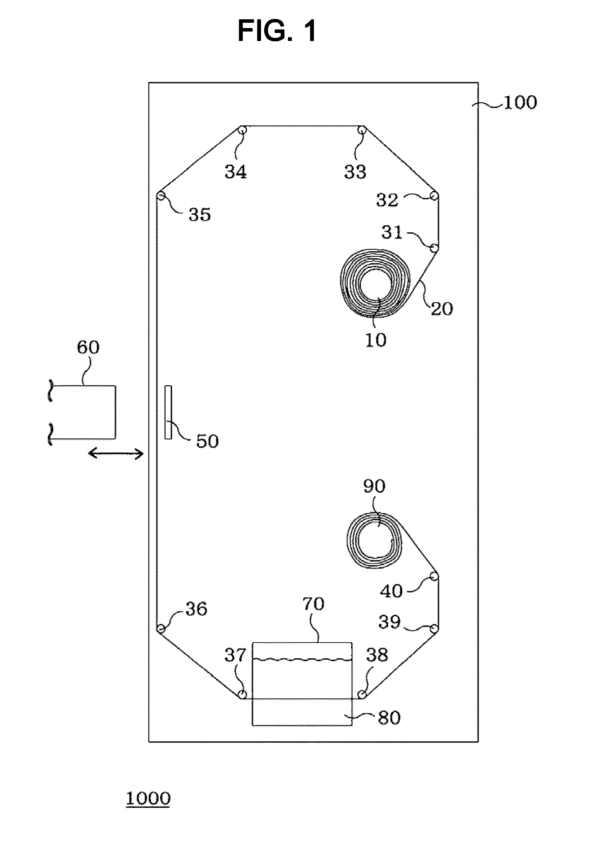

FIG. 1 is a drawing showing a schematic configuration of a magnesium cell system according to the embodiment of the present invention.

### Description of Embodiments

Hereinafter, one embodiment of the present invention will be described with reference to the drawing.

FIG. 1 is a drawing showing a schematic configuration of a magnesium cell system 1000 according to the embodiment of the present invention. FIG. 1 shows a first reel 10, a magnesium thin film 20, guides 31-40, a support 50, an electrode 60, a container 70, a liquid solution 80, a second reel 90 and a cartridge 100 that are described below.

The first reel 10 is wounded with a magnesium thin film 20. The first reel 10 is rotatably configured about an axis (not shown). The first reel 10 may be, for example, resinous such as plastics.

The magnesium thin film 20 is a negative-electrode active material in a magnesium battery, and one end thereof is connected to the first reel 10 and the other end is connected to the second reel 90. The magnesium thin film 20 has an arbitrary thickness, width and length according to the size of the cartridge 100 or the size of the space where the cartridge 100 is attached and/or detached. Several examples of the manufacturing method of the magnesium thin film 20 are shown below but the examples are not limitative.

First, the magnesium thin film 20 can be manufactured by applying magnesium on both sides or one side of a film. The film can penetrate the liquid solution 80; however, as long as a material does not react with the liquid solution 80, any material is preferable (for example, Ultra High Molecular Weight Polyethylene (UHMWPE)). Then, by allowing the film to have strength, even if the magnesium of the magnesium thin film 20 disappears by a reaction, the film per se remains, thereby the rupture of the magnesium thin film 20 per se can be prevented.

Second, the two sides of magnesium foil may be laminated with the film to manufacture the magnesium thin film 20. Then, in addition to the advantage of the above-mentioned first case, magnesium hydroxide and magnesium oxide are retained between the film membranes; thus, the reaction product of the magnesium thin film 20 is easily collected.

Furthermore, the magnesium per se that configures the magnesium thin film 20 may freely be obtained. As one example, the magnesium may be produced by desorption of oxygen from magnesium oxide by irradiating a laser to a mixture or compound such as of magnesium oxide and carbon.

The guides 31-40 define proceeding positions of the magnesium thin film 20. Any material may be used for the guides 31-40 as long as the material does not damage the magnesium thin film 20. More specifically, when the magnesium thin film 20 is configured by a film on which magnesium is applied, slidability may preferably be provided such that the magnesium does not separate from the film. The guides 31-40 may be, as one example, stainless steel and the surface thereof may be processed for improving the slidability if necessary.

The support 50 sandwiches the magnesium thin film 20 with the electrode 60. Any material may be used for the support 50 as long as the material does not damage the magnesium thin film 20. The support 50 may be, as one example, copper. Then, the support 50 has an electrode effect, thereby the generation efficiency increases.

The electrode 60 generates power in cooperation with magnesium of the magnesium thin film 20 and oxygen in the air, which is a positive-electrode active material. A drive member (not shown) moves the electrode 60 in a horizontal direction in the drawing. More specifically, the electrode 60 moves towards the support 50 side when generating power and moves towards the half-valley side of that the rest of the time including the time of the exchange of the cartridge 100. The drive member can be, as one example, a wind-up spring and can utilize the electrode 60 using a process of restoring from the wound-up position to the original position. The electrode 60 may be, for example, copper; however, as long as the electrode 60 can react with magnesium for generating power, the material is not limited to copper, but carbon, manganese dioxide and the like may be used. In this case, the material of the support 50 may also be changed depending on the material of the electrode 60.

The container 70 may contain the liquid solution 80. For example, the container 70 may be glass. However, as long as the container 70 does not dissolve in the liquid solution 80, the material is not limited to the glass.

The liquid solution 80 can react with the magnesium thin film 20 on which surface is oxidized by generation of power, that is, magnesium oxide. The liquid solution 80 may be dilute hydrochloric acid solution, dilute sulfuric acid solution, acetic acid solution and the like. When the dilute hydrochloric acid solution is used for the liquid solution 80, the liquid solution 80 generates oxygen, hydrogen, water and magnesium chloride.

The second reel 90 reels up the magnesium thin film 20. The second reel 90 is rotatably configured about an axis (not shown). The second reel 90 may be, for example, resinous such as plastics.

The cartridge 100 contains the first reel 10, the magnesium thin film 20, the guides 31-40, the support 50, the container 70, the liquid solution 80 and the second reel 90. The cartridge 100 may be, for example, resinous such as plastics. The object to be contained in the cartridge 100 is not limited to the matters shown in FIG. 1, and, for example, the container 70 and the liquid solution 80 may be provided at a side that the cartridge 100 is attached, that is, the electrode 60 side.

Next, the principle of the magnesium cell system 1000 of the present embodiment is explained.

First, the following chemical reaction occurs by the magnesium thin film 20 adjacent to the electrode 60 and oxygen in the air.

2Mg + O₂ → 2MgO

Therefore, the magnesium thin film 20 partially becomes a magnesium oxide thin film downstream of the electrode 60.

As the magnesium thin film 20 contacts with a dilute hydrochloric acid solution that is the liquid solution 80 in the container 70, the following chemical reaction occurs.

MgO + 2HCl → MgCl₂ + H₂O

Furthermore, as the magnesium thin film 20 contacts with the dilute hydrochloric acid solution that is the liquid solution 80 in the container 70 and the portion that was not oxidized contacts with the dilute hydrochloric acid solution that is the liquid solution 80 in the container 70, the following chemical reaction occurs.

Mg + 2HCl → MgCl₂ + H₂

The reason for positioning the container 70 with the liquid solution 80 downstream of the electrode 60 is to prevent reduced generation efficiency caused by hydrogen embrittlement that is generated as the H₂ gas contacting the copper that is the electrode 60. In the present embodiment, not required, but the container 70 and the electrode 60 are isolated from each other using a separator material (not shown).

Next, with an example of the length and the like of the magnesium thin film 20, a rotational speed and the like of the second reel 90 is explained.

When the magnesium cell system 1000 of the present embodiment is used as a fuel cell system of a vehicle, the magnesium thin film 20 may have a thickness of a several tens of micrometers to a several hundreds of micrometers, a width of 5 to 10 centimeters and a length of 100 to 200 meters.

Furthermore, regarding the magnesium thin film 20 under the condition of such thickness and length, the relational expression, a radius of the magnesium thin film 20 squared × 3.14 = a thickness × a length of a tape, is established. Therefore, in a form that the first reel 10 is reeled, the radius is about 8 cm and the size is extremely small compared to that of the conventional fuel cell system for a vehicle.

When one would like run an ordinary vehicle for about 500 km, theoretically four cartridges 100 comprising a magnesium thin film 20 having a length of 100 µm, a width of 10 cm and a 200 m length need to be prepared. The reason thereof is as follows. First, for the 500 km run, energy of about 100 kWh is required. This can be expressed as 360 MJ by multiplying 100 kW by one hour, that is, 3600 seconds.

On the other hand, the heat generated by magnesium is 25 kJ/g. Then, the amount of magnesium required for the 500 km run is 14.4 kg, which is a value obtained by dividing 360 MJ by 25 kJ.

Then, the amount of magnesium for the magnesium thin film 20 having a thickness of 100 µm, a width of 10 cm and a length of 200 m is 3.4 kg; thus, as described above, four cartridges 100 comprising a magnesium thin film 20 with these features need to be prepared.

However, the conversion efficiency is not necessary 100%; thus, when one would like to run an ordinary vehicle for about 500 km, assumingly, approximately six to eight cartridges 100 should be prepared.

Furthermore, when the magnesium cell system 1000 of the present embodiment is used as a fuel cell system of a vehicle, the take-up speed of the magnesium thin film 20 regarding the second reel 90 may be approximately 5 mm/sec. The reason thereof is, if a vehicle runs 500 km at 50 km per hour, for example, the running time is 10 hours, thereby the magnesium thin film 20 having a length of 200 m is reeled in 10 hours.

However, as all of the magnesium of the magnesium thin film 20 does not react just once passing around the electrode 60, the magnesium thin film 20 may be configured to be reeled from the second reel 90 side to the first reel 10 side so that the magnesium thin film 20 passes through several times. In this case, the container 70 with the liquid solution 80 may also be provided between the electrode 60 and the first reel 10.

Furthermore, when the magnesium thin film 20 is reciprocatably configured to the electrode 60 in this way, the take-up speeds of the magnesium thin film 20 regarding the first reel 10 and the second reel 90 may be twice or three times faster than the above-mentioned example.

### Industrial Applicability

The present invention is applicable in the field of batteries for vehicles.

### Reference Signs List

- 10: First reel
- 20: Magnesium thin film
- 31-40: Guides
- 50: Support
- 60: Electrode
- 70: Container
- 80: Liquid solution
- 90: Second reel
- 100: Cartridge
- 1000: Magnesium cell system

## Claims

1. A cell system using air as a positive-electrode active material and a specific substance as a negative-electrode active material, the cell system comprising:
a film having a thin film (20) of the specific substance on both or one side;
a pair of reels (10,90), each end being connected to the thin film; and
an electrode (60) positioned in a vicinity of a path of the thin film between each of the reels, wherein the thin film (20) and the pair of reels (10, 90) are contained in a cartridge (100)
**characterized by** comprising a container (70) that is positioned downstream of the electrode (60) and includes a liquid solution (80) that dissolves the specific substance oxidized when power is generated, the container (70) being contained in the cartridge (100).

2. The cell system according to Claim 1, wherein the specific substance is applied on both sides of the film.

3. The cell system according to Claim 1 or 2, wherein two sides of foil of the specific substance are laminated with the film.

4. The cell system according to any one of Claims 1-3, further comprising a container (70) that is positioned between the electrode (60) and the first reel (10), includes a liquid solution (80) that dissolves the specific substance oxidized when power is generated, and is contained in the cartridge (100).

5. The cell system according to Claim 1, wherein a component of the liquid solution (80) includes any one of hydrochloric acid, sulfuric acid, acetic acid, nitric acid, stearic acid, formic acid, citric acid, aqueous ammonia, sodium hydroxide, calcium chloride, sodium carbonate, ammonium chloride, ethanol, benzyl alcohol, cyclohexanol, ethylene glycol, acetone, benzene, aniline, toluene, cyclohexanone, carbon tetrachloride, trichlorethylene, castor oil and synthetic detergent.

6. The cell system according to any of Claims 1-5, wherein
the specific substance is any one of magnesium, zinc, lithium, iron, carbon, sodium, beryllium, aluminum, cadmium, sulfur and lead;
the electrode (60) uses any one of copper, carbon, manganese dioxide, aluminum, gold, silver, beryllium and magnesium.

7. The cell system of Claim 6, wherein the specific substance is magnesium.

8. A method of generating electrical current, wherein
a cell having air as a positive electrode active material and a specific substance as a negative electrode active material comprises a thin film (20) of said specific substance; and
the film having a thin film (20) of the specific substance on both or one side is reeled between a pair of reels (10,90); and
during transfer between the reels the thin film contacts an electrode (60); and
the electrode (60) generates power in contact with the thin film; and the thin film (20) is oxidized,
wherein the thin film (20) and the pair of reels (10, 90) are contained in a cartridge (100),
**characterized in that** the thin film (20) is prepared for another cycle through the cell by dissolving the oxidized thin film (20) in a liquid solution (80) in a container (70), and
the container (70) is contained in the cartridge (100) and is positioned downstream of the electrode (60).

9. The method according to Claim 8, wherein the specific substance is applied on both sides of the film.

10. The method according to Claim 8 or 9, wherein two sides of foil of the specific substance are laminated with the film.

11. The method according to any of Claims 8-10, further comprising a container (70) that is positioned between the electrode (60) and the first reel (10), includes a liquid solution (80) that dissolves the specific substance oxidized when power is generated, and is contained in the cartridge (100).

12. A method according to any of claims 8-11, wherein
the specific substance is any one of magnesium, zinc, lithium, iron, carbon, sodium, beryllium, aluminium, cadmium, sulphur and lead; and
the electrode is any one of copper, carbon, manganese dioxide, aluminium, gold, silver, beryllium and magnesium.

13. A method according to claim 12, wherein the specific substance is magnesium.

14. A method according to any of claims 8-13, wherein
a component of the liquid solution includes any one of hydrochloric acid, sulphuric acid, acetic acid, nitric acid, stearic acid, formic acid, aqueous ammonia, sodium hydroxide, calcium chloride, sodium carbonate, ammonium chloride, ethanol, benzyl alcohol, cyclohexanol, ethylene glycol, acetone, benzene, aniline, toluene, cyclohexanone, carbon tetrachloride, trichlorethylene, castor oil and synthetic detergent.

## Patentansprüche

1. Zellensystem, das Luft als ein positives aktives Elektrodenmaterial und eine spezifische Substanz als ein negatives aktives Elektrodenmaterial verwendet, wobei das Zellensystem umfasst:
Einen Film mit einem Dünnfilm (20) der spezifischen Substanz auf beiden Seiten oder einer Seite;
ein Paar von Rollen (10, 90), wobei jedes Ende mit dem Dünnfilm verbunden ist; und
eine Elektrode (60), die in der Nähe einer Bahn des Dünnfilms zwischen jeder der Rollen positioniert ist, wobei der Dünnfilm (20) und das Paar von Rollen (10, 90) in einer Kassette (100) enthalten sind;
**gekennzeichnet durch** einen Behälter (70), welcher der Elektrode (60) nachgeschaltet positioniert ist und eine flüssige Lösung (80) einschließt, welche die spezifische Substanz auflöst, die oxidiert wird, wenn Strom erzeugt wird, wobei der Behälter (70) in der Kassette (100) enthalten ist.

2. Zellensystem nach Anspruch 1, wobei die spezifische Substanz auf beide Seiten des Films aufgetragen ist.

3. Zellensystem nach Anspruch 1 oder 2, wobei zwei Seiten von Folie der spezifischen Substanz mit dem Film beschichtet sind.

4. Zellensystem nach irgendeinem der Ansprüche 1-3, das ferner einen Behälter (70) umfasst, der zwischen der Elektrode (60) und der ersten Rolle (10) positioniert ist, der eine flüssige Lösung (80) einschließt, welche die spezifische Substanz auflöst, die oxidiert, wenn Strom erzeugt wird und die in der Kassette (100) enthalten ist.

5. Zellensystem nach Anspruch 1, wobei eine Komponente der flüssigen Lösung (80) irgendeins von Folgenden einschießt: Chlorwasserstoffsäure, Schwefelsäure, Essigsäure, Salpetersäure, Stearinsäure, Ameisensäure, Zitronensäure, wässriges Ammoniak, Natriumhydroxid, Calciumchlorid, Natriumcarbonat, Ammoniumchlorid, Ethanol, Benzylalkohol, Cyclohexanol, Ethylenglycol, Aceton, Benzen, Anilin, Toluen, Cyclohexanon, Kohlenstofftetrachlorid, Trichlorethylen, Rizinusöl und synthetisches Reinigungsmittel.

6. Zellensystem nach irgendeinem der Ansprüche 1-5, wobei
die spezifische Substanz irgendeine von Folgenden ist: Magnesium, Zink, Lithium, Eisen, Kohlenstoff, Natrium, Beryllium, Aluminium, Kadmium, Schwefel und Blei;
die Elektrode (60) irgendeins der Folgenden verwendet: Kupfer, Kohlenstoff, Mangandioxid, Aluminium, Gold, Silver, Beryllium und Magnesium.

7. Zellensystem nach Anspruch 6, wobei die spezifische Substanz Magnesium ist.

8. Verfahren zur Erzeugung elektrischen Stroms, wobei
eine Zelle mit Luft als ein positives aktives Elektrodenmaterial und einer spezifischen Substanz als ein negatives aktives Elektrodenmaterial einen Dünnfilm (20) der genannten spezifischen Substanz umfasst; und
der Film mit einem Dünnfilm (20) der spezifischen Substanz auf beiden Seiten oder einer Seite zwischen einem Paar von Rollen (10, 90) gerollt wird und
der Dünnfilm, während Transferieren zwischen den Rollen, eine Elektrode (60) kontaktiert; und
die Elektrode (60) in Kontakt mit dem Dünnfilm Strom erzeugt; und der Dünnfilm (20) oxidiert wird, wobei der Dünnfilm (20) und das Paar von Rollen (10, 90) in einer Kassette (100) enthalten sind,
**dadurch gekennzeichnet, dass** der Dünnfilm (20) für einen weiteren Zyklus durch die Zelle durch Auflösen des oxidierten Dünnfilms (20) in einer flüssigen Lösung (80) in einem Behälter (70) vorbereitet wird, und
der Behälter (70) in der Kassette (100) enthalten ist und der Elektrode (60) nachgeschaltet positioniert ist.

9. Verfahren nach Anspruch 8, wobei die spezifische Substanz auf beide Seiten des Films aufgetragen ist.

10. Verfahren nach Anspruch 8 oder 9, wobei zwei Seiten von Folie der spezifischen Substanz mit dem Film beschichtet sind.

11. Verfahren irgendeinem der Ansprüche 8-10, das ferner einen Behälter (70) umfasst, der zwischen der Elektrode (60) und der ersten Rolle (10) positioniert ist, der eine flüssige Lösung (80) einschließt, welche die spezifische Substanz auflöst, die oxidiert wird, wenn Strom erzeugt wird und der in der Kassette (100) enthalten ist.

12. Verfahren nach irgendeinem der Ansprüche 8-11, wobei
die spezifische Substanz irgendeine von Folgenden ist: Magnesium, Zink, Lithium, Eisen, Kohlenstoff, Natrium, Beryllium, Aluminium, Kadmium, Schwefel und Blei; und
die Elektrode irgendeine aus: Kupfer, Kohlenstoff, Mangandioxid, Aluminium, Gold, Silver, Beryllium und Magnesium ist.

13. Verfahren nach Anspruch 12, wobei die spezifische Substanz Magnesium ist.

14. Verfahren nach irgendeinem der Ansprüche 8-13, wobei
eine Komponente der flüssigen Lösung irgendeins von Folgenden einschießt: Chlorwasserstoffsäure, Schwefelsäure, Essigsäure, Salpetersäure, Stearinsäure, Ameisensäure, wässriges Ammoniak, Natriumhydroxid, Calciumchlorid, Natriumcarbonat, Ammoniumchlorid, Ethanol, Benzylalkohol, Cyclohexanol, Ethylenglycol, Aceton, Benzen, Anilin, Toluen, Cyclohexanon, Kohlenstofftetrachlorid, Trichlorethylen, Rizinusöl und synthetisches Reinigungsmittel.

## Revendications

1. Système cellulaire qui fait usage de l'air comme matériau actif de l'électrode positive et d'une substance particulière comme matériau actif de l'électrode négative, le système cellulaire comportant:
une pellicule ayant un film mince (20) de la substance particulière sur un côté ou bien sur les deux côtés;
deux bobines (10, 90), chaque extrémité étant raccordée au film mince; et
une électrode (60) placée à côté de la voie de défilement du film mince entre les deux bobines, **caractérisé en ce que** le film mince (20) et les deux bobines (10, 90) se trouvent à l'intérieur d'une cartouche (100)
**caractérisé en ce qu'**un récipient (70) est placé en aval de l'électrode (60) et contient une solution liquide (80) qui sert à dissoudre la substance particulière qui est oxydée lorsque l'électricité est produite, le récipient (70) se trouvant à l'intérieur de la cartouche (100).

2. Système cellulaire selon la revendication 1, **caractérisé en ce que** la substance particulière est appliquée sur les deux côtés de la pellicule.

3. Système cellulaire selon la revendication 1 ou 2, **caractérisé en ce que** deux couches de feuille de la substance particulière sont doublées avec la pellicule.

4. Système cellulaire selon l'une quelconque des revendications 1-3, comportant par ailleurs un récipient (70) qui est placé entre l'électrode (60) et la première bobine (10), et qui contient une solution liquide (80) servant à dissoudre la substance particulière oxydée lorsque l'électricité est produite, et qui se trouve à l'intérieur de la cartouche (100).

5. Système cellulaire selon la revendication 1, **caractérisé en ce que** l'un des constituants de la solution liquide (80) est l'un quelconque parmi les éléments suivants: acide chlorhydrique, acide sulfurique, acide acétique, acide nitrique, acide stéarique, acide formique, acide citrique, ammoniaque, hydroxyde de sodium, chlorure de calcium, carbonate de sodium, chlorure d'ammonium, éthanol, alcool de benzyl, cyclohexanol, glycol d'éthylène, acétone, benzène, aniline, toluène, cyclohexanone, tétrachlorure de carbone, trichloréthylène, huile de ricin et détergent synthétique.

6. Système cellulaire selon l'une quelconque des revendications 1-5, **caractérisé en ce que**
la substance particulière est l'un quelconque des éléments suivants: magnésium, zinc, lithium, fer, carbone, sodium, béryllium, aluminium, cadmium, soufre et plomb;
l'électrode (60) est composée de l'un quelconque parmi les éléments suivants: cuivre, carbone, bioxyde de manganèse, aluminium, or, argent, béryllium et magnésium.

7. Système cellulaire selon la revendication 6, **caractérisé en ce que** la substance particulière est le magnésium.

8. Procédé de production de courant électrique, **caractérisé en ce que**
une cellule qui fait usage de l'air comme matériau actif de l'électrode positive et d'une substance particulière comme matériau actif de l'électrode négative comprend un film mince (20) composé de cette substance particulière; et
la pellicule qui est dotée d'un film mince (20) composé de la substance particulière sur les deux côtés ou bien sur un seul côté est bobinée entre deux bobines (10, 90); et
pendant le transfert entre les bobines le film mince entre en contact avec une électrode (60); et
l'électrode (60) produit de l'électricité lorsqu'elle entre en contact avec le film mince; et
le film mince (20) est oxydé,
**caractérisé en ce que** le film mince (20) et les deux bobines (10, 90) se trouvent à l'intérieur d'une cartouche (100),
**caractérisé en ce que** le film mince (20) est préparé pour un autre cycle à travers la cellule par dissolution du film mince (20) oxydé dans une solution liquide (80) qui se trouve à l'intérieur d'un récipient (70), et
**en ce que** le récipient (70) se trouve à l'intérieur de la cartouche (100) et placé en aval de l'électrode (60).

9. Procédé selon la revendication 8, **caractérisé en ce que** la substance particulière est appliquée sur les deux côtés du film..

10. Procédé selon la revendication 8 ou 9, **caractérisé en ce que** deux couches de la substance particulière sont doublées avec la pellicule.

11. Procédé selon l'une quelconque des revendications 8-10, comportant par ailleurs un récipient (70) qui est placé entre l'électrode (60) et la première bobine (10), et qui contient une solution liquide (80) servant à dissoudre la substance particulière oxydée lorsque l'électricité est produite, et qui se trouve à l'intérieur de la cartouche (100).

12. Procédé selon l'une quelconque des revendications 8-11, **caractérisé en ce que**
la substance particulière est l'un quelconque des éléments suivants:: magnésium, zinc, lithium, fer, carbone, sodium, béryllium, aluminium, cadmium, soufre et plomb; et
l'électrode est composée de l'un quelconque parmi les éléments suivants: cuivre, carbone, bioxyde de manganèse, aluminium, or, argent, béryllium et magnésium.

13. Procédé selon la revendication 12, **caractérisé en ce que** la substance particulière est le magnésium.

14. Procédé selon l'une quelconque des revendications 8-13, **caractérisé en ce que**
l'un des constituants de la solution liquide (80) est l'un quelconque parmi les éléments suivants: acide chlorhydrique, acide sulfurique, acide acétique, acide nitrique, acide stéarique, acide formique, ammoniaque, hydroxyde de sodium, chlorure de calcium, carbonate de sodium, chlorure d'ammonium, éthanol, alcool de benzyl, cyclohexanol, glycol d'éthylène, acétone, benzène, aniline, toluène, cyclohexanone, tétrachlorure de carbone, trichloréthylène, huile de ricin et détergent synthétique.
